Europäisches Patentamt

European Patent Office

Office européen des brevets

(11) Publication number: 0 341 934
A1

## EUROPEAN PATENT APPLICATION

(21) Application number: 89304583.1

(22) Date of filing: 05.05.89

(51) Int. Cl.⁴: G01M 3/04 , G01M 3/16

(30) Priority: 09.05.88 JP 60042/88

(43) Date of publication of application:
15.11.89 Bulletin 89/46

(84) Designated Contracting States:
AT BE CH DE ES FR GB GR IT LI LU NL SE

(71) Applicant: JUNKOSHA CO. LTD.
25-25, Miyasaka 2-chome
Setagaya-ku Tokyo 156(JP)

(72) Inventor: Akiba, Juji
1-27-202, 494 Shimo-Kayama Hitaka-machi
Iruma-gun Saitama(JP)

(74) Representative: Knott, Stephen Gilbert et al
MATHISEN, MACARA & CO. The Coach
House 6-8 Swakeleys Road
Ickenham Uxbridge Middlesex UB10 8BZ(GB)

(54) Leakage sensor.

(57) A leakage sensor comprises a pair of spaced electrical conductors (3,3) sandwiched substantially parallel to each other between two strips of electrically insulating tape (5,6), at least one of the insulating tapes (5,6) being provided with at least one opening (7) which is common to both conductors and at which the two conductors are exposed to the environment.

Fig.1.

## LEAKAGE SENSOR

The present invention relates to a flat leakage sensor for detecting the occurrence of a leak by measuring a change in the electrical characteristics between a pair of conductors caused by the leaking fluid.

A known sensor of this type is described in Japanese Laid-Open Utility Model Application No. 58-96248, and is illustrated in Figure 4 of the accompanying drawings. This known sensor comprises a pair of conductors 3,3 which are installed as electrodes between insulating tapes 1 and 4 and which are exposed to the environment via pairs of holes 2,2 formed in the tape 1 at intervals along its length.

The sensor is ordinarily manufactured in the form of an elongate flat cable, and an appropriate length is cut from the cable to form the required sensor as and when needed. Accordingly, two rows of holes 2,2 are formed along the length of the insulating tape 1 at the time of manufacture, and the two conductors 3,3 are aligned with the respective rows of holes while being sandwiched between this tape 1 and the further insulating tape 4 along the length thereof to form the long sensor cable. However, because the sensor is designed so that the conductors 3,3 are exposed via the paired holes 2,2, the spacing between the two conductors 3,3 must be accurately matched with the spacing between the two rows of holes 2,2 in the insulating tape 1 at the time of manufacture. As a result, a relatively high-precision manufacturing technique is required. If the positioning is inaccurate, the product is not entirely satisfactory. The yield of the manufacturing process therefore tends to be low, resulting in a relatively expensive sensor with poor production efficiency.

With the aim of overcoming these drawbacks, according to the invention there is provided a leakage sensor comprising a pair of electrical conductors sandwiched substantially parallel to eachother between two strips of electrically insulating tape, the conductors being spaced from eachother, and at least one of the strips of insulating tape having at least one opening which is common to both conductors and at which both conductors are exposed.

The sensor preferably has a plurality of common openings at which both conductors are exposed, and the or each common opening may be formed through both strips of insulating tape.

The strips of electrically insulating tape may be formed from a polyester tape or a fluororesin tape.

It will thus be appreciated that in order to solve the abovementioned problems associated with the known sensors, a leakage sensor in accordance with the invention is characterized by the fact that a pair of conductors are sandwiched between two strips of insulating tape so that the conductors are separated from each other, and both of these conductors are exposed at one or more common openings or holes which are formed in at least one of the strips of insulating tape.

In manufacturing a sensor in accordance with the invention, one or more holes, which are somewhat wider than the spacing between the two conductors, are formed in at least one of the strips of insulating tape. In this case, because a single hole or a single row of holes is sufficient, there is no need to be concerned about precision spacing as in the case of the conventional paired-hole system. Accordingly, the precision required in terms of the size and positioning of the hole or holes is somewhat relaxed. Since the two conductors are installed with a certain spacing between them and are exposed together at the holes, there may be some permissible tolerance in the positioning of the conductors without having any substantial deleterious effect on the operation of the sensor.

In operation, a leaking liquid enters one of the common holes and contacts both conductors simultaneously so that the conductors are short-circuited. The leak can thus be detected by detecting a change in the electrical characteristics between the conductors using a detector or alarm which is connected to the terminals of the conductors.

Embodiments of the present invention will now be described, by way of example, with reference to the accompanying drawings, in which:-

Figure 1 is an oblique perspective view of one embodiment of a sensor in accordance with the invention;

Figure 2 is a cross-section of the sensor taken along the line 2-2 in Figure 1, and illustrating its operation;

Figure 3 is a top plan view illustrating a step in the formation of a sensor in accordance with the invention;

Figure 4 is an oblique perspective view of a leakage sensor constructed in accordance with the prior art.

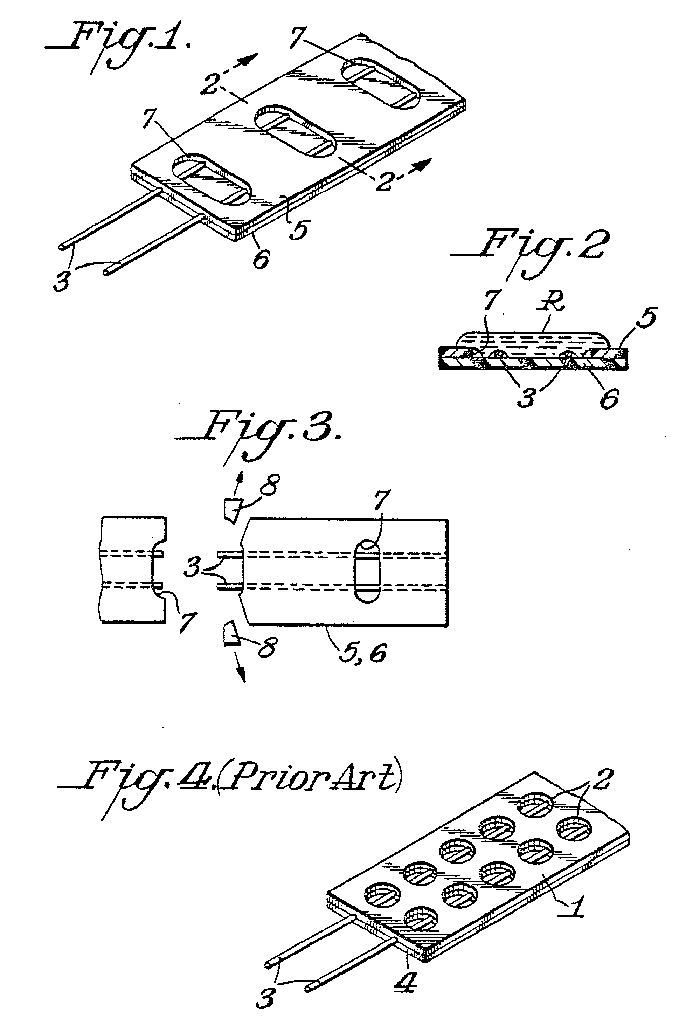

In the sensor shown in Figures 1 and 2, strips of an insulating tape 5,6, which are of an insulating material such as a polyester or a fluororesin, e.g. tetrafluoroethylene resin, are bonded together with a pair of electrical conductors 3,3 sandwiched between them so that the conductors 3,3 are fixed in place. The conductors 3,3 extend along the length of the bonded strips of insulating tape 5,6, and are installed parallel to each other with a fixed spacing between them.

Openings or holes 7 are formed in a single row along the length of the upper strip of insulating tape 5, each hole 7 having an oblong shape which extends substantially across the width of the insulating tape 5 so that portions of the two conductors 3,3 are simultaneously exposed together in each hole 7.

In manufacturing the sensor, the holes 7 may first be formed in a single row in the strip of insulating tape 5 by means of a punch, and the strip 5 then aligned with the other strip of insulating tape 6. The conductors 3,3 are positioned between the two strips of insulating tape 5,6 so that the conductors are aligned with the holes 7, and the two strips of tape 5,6 are bonded together. As a result, the conductors 3,3 are fixed in place between the strips of insulating tape 5,6.

In this process, it is necessary to form only one row of holes 7 which expose the conductors 3,3, and the precision required in terms of the size and positioning of the holes is somewhat relaxed compared with the requirements in manufacturing a conventional paired-hole sensor as described earlier. It is necessary only that there be some spacing between the conductors 3,3 exposed in each of the holes 7. Hence, some discrepancy in positioning of the conductors is permissible, with the result that precision is relaxed and productivity is increased.

As in the case of the conventional sensor described earlier, a sensor of an appropriate length for the leak detection operation it is to perform is cut from the sensor cable which is produced in the above described manner. For example, in the case of overflow detection for a bathtub, a sensor is cut to an appropriate length and bonded to the exterior surface of the bathtub, and a detector is connected to the ends of both conductors 3,3 via lead wires. If the water in the bathtub should overflow, water will enter the holes 7 so that both conductors 3,3 are short-circuited by the water droplet(s) as indicated at R in Figure 2. Accordingly, the electrical characteristics between the conductors 3,3 will change, and this change is detected by the detector to indicate the occurrence of the overflow.

If in this case a fluororesin is used as the material of the insulating tapes 5,6, the water-repelling characteristics of the fluororesin will ensure that very little water adheres to the surface of the sensor. As a result, erroneous detection due to splashed water will be substantially eliminated. By selecting an appropriate size for the openings 7, it is possible to design the sensor so that it will be actuated only if a liquid pressure exceeding a given value is applied. Accordingly, a highly reliable sensor can be provided.

In the present examples, holes 7 are formed in only one of the strips of insulating tape 5. However, it would of course be possible to form holes in both of the strips of insulating tape 5,6. The positions of the holes in the two strips of tape 5,6 may register with eachother or they may be alternated.

In cases where the upper and lower holes coincide in position, the formation of the terminal of the conductors 3,3 can be performed very simply. Specifically, when the sensor cable is cut, it is necessary merely to cut the sensor at one of the holes 7 as shown in Figure 3. Then, the insulating tape 5,6 on both sides of the hole 7 is slightly trimmed, and the waste 8 is discarded. As a result, the two conductors 3,3 are exposed side by side and can be connected "as is" to a connector.

In the example shown, the holes 7 have an oblong shape, but other shapes, such as circular or square, are of course possible.

The conductors 3,3 may be metal wire conductors, metal foil conductors, or conductive resin conductors, or they may be formed by combining such conductors with an insulating material. For example, by using conductors formed by installing a conductive resin layer around the circumference of a metal wire, it would be possible to endow the conductors with corrosion resistance so that corrosive liquids could be detected.

If desired, the number of conductors used may be more than two; for example three or four conductors may be used.

The sensor in accordance with the present invention may be used for the detection of any liquid, as long as the liquid is electrically conductive or otherwise suitably changes the electrical characteristics between the conductors.

In the case of a conventional, paired-hole-type sensor, the conductors are only short-circuited when there is sufficient leakage to bridge the space between the two holes in the two rows. With a sensor in accordance with the present invention, however, the conductors are short-circuited by liquid droplet(s) penetrating into a single hole. Accordingly, the sensitivity of the sensor is higher. In addition, the sensor is much easier to manufacture without adversely affecting its operation, as described earlier.

## Claims

1. A leakage sensor comprising a pair of electrical conductors (3,3) sandwiched substantially parallel to eachother between two strips of electrically insulating tape (5,6), the conductors being spaced from eachother, characterised in that at least one of the strips of insulating tape (5,6) has at least one opening (7) which is common to both conductors (3,3) and at which both conductors are exposed.

2. A sensor according to claim 1 having a plurality of said openings (7) at which both conductors (3,3) are exposed.

3. A sensor according to claim 1 or claim 2 wherein the or each opening (7) at which both conductors (3,3) are exposed is formed through both strips of insulating tape (5,6).

4. A sensor according to any one of the preceding claims wherein the strips of electrically insulating tape (5,6) are formed from polyester tape.

5. A sensor according to any one of claims 1 to 3, wherein the strips of electrically insulating tape (5,6) are formed from fluororesin tape.

*Fig.1.*

*Fig.2*

*Fig.3.*

*Fig.4.(Prior Art)*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | JP-U-5 896 248<br>* figures 1,4 *<br>--- | 1 | G 01 M 3/04<br>G 01 M 3/16 |
| A | DE-A-3 617 958 (JUNKOSHA CO. LTD.)<br>* pages 4-7 *<br>--- | 1,2 | |
| A | DE-A-3 535 918 (JUNKOSHA CO. LTD.)<br>* pages 4-8 *<br>----- | 1-5 | |

TECHNICAL FIELDS
SEARCHED (Int. Cl.5)

G 01 M 3/00

The present search report has been drawn up for all claims

| Place of search | Date of completion of the search | Examiner |
|---|---|---|
| BERLIN | 28-06-1989 | DIETRICH A. |

EPO FORM 1503 03.82 (P0401)